# EUROPEAN PATENT APPLICATION

(11) **EP 4 484 788 A2**
(43) Date of publication of application: **01.01.2025**
(21) Application number: 24174685.8
(22) Date of filing: 07.05.2024
(51) Int. Cl.: F16F 9/346, F16F 9/49

(54) **DAMPER FORCE FORMING MEMBER AND DAMPER APPARATUS INCLUDING THE SAME**

(30) Priority: 09.05.2023 KR 20230059793
(71) Applicant: HL Mando Corporation, Pyeongtaek-si, Gyeonggi-do 17962 (KR)
(72) Inventor: KIM, Gyeongmin, 12767 Gwangju-si, Gyeonggi-do (KR); BAEK, Kwangduk, 16823 Yongin-si, Gyeonggi-do (KR)
(74) Representative: Pfenning, Meinig & Partner mbB

(57) **Abstract**

A damping force forming member and a damper apparatus including the same are provided. A damping force forming member for forming a damping force is installed in a damper apparatus including a piston, a rod supporting the piston, and an inner tube in which a first chamber and a second chamber are separated by the piston placed therein. The damping force forming member includes: a body supported by the inner tube, that is placed in such a manner that at least part of the inner circumference thereof faces the outer circumference of the rod and forms a damping force when the rod extends; a plurality of through-holes formed at intervals on the body; and a first flow passageway placed between the body and the inner tube, for guiding the movement of a fluid in the first chamber that has passed through the plurality of through-holes.

## Description

### CROSS REFERENCE TO RELATED APPLICATION

The present application claims priority to Korean Patent Application No. 10-2023-0059793, filed May 09, 2023, the entire contents of which is incorporated herein for all purposes by this reference.

### TECHNICAL FIELD

An embodiment of the present disclosure generally relates to a damping force forming member and a damper apparatus including the same, and, more particularly, relates to a damping force forming member that is capable of forming additional damping force during a rebound stroke, besides a damping force formed by a piston, and a damper apparatus including the same.

### BACKGROUND

Generally, a damper apparatus pressurizes a fluid in it in the event of an external shock and absorb the shock by the resistance of the fluid. Such a damper apparatus is installed in a vehicle to absorb abrupt shocks when the vehicle is moving, thereby providing better ride quality to the driver.

The damper apparatus performs a compression stroke and a rebound stroke.

In particular, when the rod extends to its maximum during the rebound stroke, shocks can occur.

Thus, in the conventional art, the shape of the inside of a tube was altered in order to reduce such shocks during the rebound stroke.

However, altering the inside of the tube requires a new process for manufacturing the tube. Also, when the performance of the damper apparatus is varied, such a tube needs to be replaced entirely or a new tube needs to be manufactured, and this makes tuning of the damper apparatus not an easy operation when the driver is required to do it or the vehicle specification entails it.

Thus, there arises a need for a damper apparatus that performs a rebound stroke in a stable manner and can be easily tuned without hindering ride quality for the driver or the passengers.

### SUMMARY

An embodiment of the present disclosure provides a damping force forming member that performs a rebound stroke in a stable manner and can be easily tuned, and a damper apparatus including the same.

According to an exemplary embodiment of the present disclosure, there is provided a damping force forming member for forming a damping force, that is installed in a damper apparatus including a piston, a rod that supports the piston, and an inner tube in which a first chamber and a second chamber are separated by the piston placed therein, the damping force forming member comprising: a body supported by the inner tube, that is placed in such a manner that at least part of the inner circumference thereof faces the outer circumference of the rod and forms a damping force when the rod extends; a plurality of through-holes formed at intervals on the body; and a first flow passageway placed between the body and the inner tube, for guiding the movement of a fluid in the first chamber that has passed through the plurality of through-holes.

Furthermore, the first flow passageway may be formed in one direction of the body.

Furthermore, the plurality of through-holes may be disposed at intervals in one direction of the body.

Furthermore, a plurality of first flow passageways may be disposed at intervals in a circumferential direction of the body.

Furthermore, one of the plurality of first flow passageways may be formed in one region of the body where the plurality of through-holes are formed.

Furthermore, the damping force forming member may further comprise a second flow passageway formed in a circumferential direction of the body by recessing the outer circumference of the body, for directing a fluid that has passed through the plurality of through-holes to move along the outer circumference of the body.

Furthermore, when the rod extends, a pressurized fluid in the body may be discharged out of the body through the plurality of through-holes, and the damping force may be adjusted.

According to an exemplary embodiment of the present disclosure, there is provided a damper apparatus comprising: a piston; a rod that supports the piston; and an inner tube having a fluid therein in which a first chamber and a second chamber are separated by the piston; a stopper spaced apart from the piston and supported by the rod; a piston ring supported by the stopper; and a damping force forming member, at least part of which is placed in the first chamber of the inner tube, and which forms a damping force through contact with the piston ring when the rod extends.

Furthermore, the piston ring may include: a ring body placed in a circumferential direction of the stopper and having an opening so that both ends of the stopper are spaced apart from each other; and a ring flow passageway formed on one side of the ring body closer to the damping force forming member than the piston, for guiding the movement of fluid.

Furthermore, when the inner circumference of the damping force forming member and the piston ring come into contact with each other, the ring body may move in a direction in which the opening becomes narrower, and a fluid in the damping force forming member may be restrained from passing through the stopper and moving toward the piston.

Furthermore, the damping force forming member may include a through-hole that directs the fluid in the damping force forming member to be discharged between the outer circumference of the damping force forming member and the inner tube, when the inner circumference of the damping force forming member and the piston ring come into contact with each other.

Furthermore, a plurality of through-holes may become smaller in diameter farther away from the piston.

Furthermore, the damping force forming member may further include a first flow passageway placed parallel to one direction in which the plurality of through-holes are disposed, spaced apart from the inner tube.

Furthermore, the damping force forming member may further include a second flow passageway recessed in a direction intersecting the first flow passageway, for guiding the movement of a fluid that has passed through the first flow passageway.

Furthermore, the ring flow passageway may be formed by recessing one region of the ring body which is positioned further away from the piston than the ring flow passageway, and, when the rod contracts, may direct at least part of the fluid in the first chamber to pass through the stopper and move in a direction away from the piston.

According to an embodiment of the present disclosure, a damping force forming member and a damper apparatus including the same are able to prevent shocks to the damper apparatus by using a hydraulic pressure when the rod moves in a direction in which it extends, thereby providing more comfortable ride quality to the driver.

Specifically, additional damping force is provided through fluid resistance when the rod extends to a certain stroke or longer, thereby effectively preventing shocks caused by the full stroke travel of the rod.

### BRIEF DESCRIPTION OF THE DRAWINGS

FIG. 1 depicts a damper apparatus including a damping force forming member according to an embodiment of the present disclosure.
FIG. 2 depicts an exploded view of a damping force forming member and some components of a damper apparatus, according to an embodiment of the present disclosure.
FIG. 3 depicts a damping force forming member according to an embodiment of the present disclosure.
FIG. 4 depicts a configuration structure of a damping force forming member and an inner tube according to embodiments of the present disclosure.
FIG. 5 depicts a partial exploded perspective view of the configuration structure of a damping force forming member and an inner tube according to an embodiment of the present disclosure.
FIGS. 6 to 11 depict an operation process for a damper apparatus according to an embodiment of the present disclosure.
FIG. 12 depicts a damping force diagram (F-V diagram) that changes with the velocity of a damper apparatus according to an embodiment of the present disclosure.

### DETAILED DESCRIPTION

Embodiments of the present disclosure will be described in detail below with reference to the accompanying drawings so that those having ordinary knowledge in the art to which the present disclosure pertains can easily practice the present disclosure. The present disclosure may be implemented in various different forms, and is not limited to the embodiments described herein.

It is noted that the drawings are schematic, and are not necessarily drawn to scale. The relative dimensions and ratios of the components in the drawings may be exaggerated or diminished in size for the sake of clarity and convenience, and such arbitrary dimensions are merely illustrative and are not limitative. Furthermore, the same reference symbol is used for the same structure, element or part shown in two or more drawings in order to represent similar features.

The embodiments of the present disclosure specifically illustrate ideal embodiments of the present disclosure. As a result, various modifications of illustrations are expected. Accordingly, the embodiments are not limited to the specific forms of illustrated regions, and include, for example, the modifications of shapes resulting from manufacture.

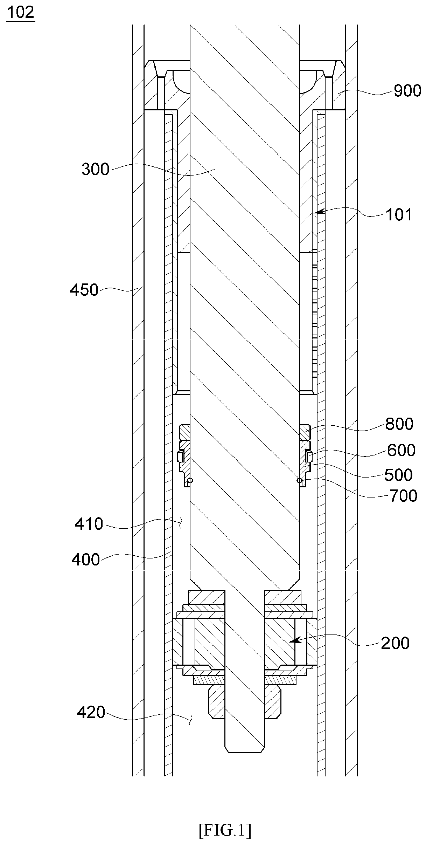

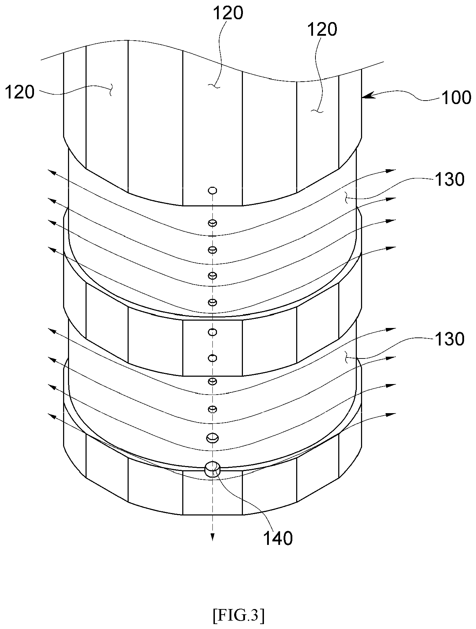

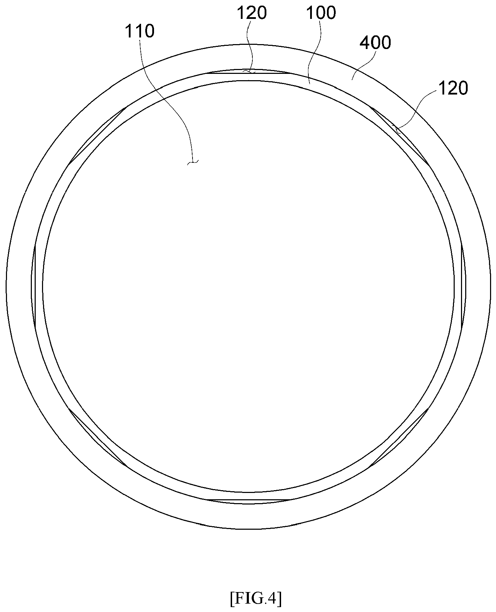

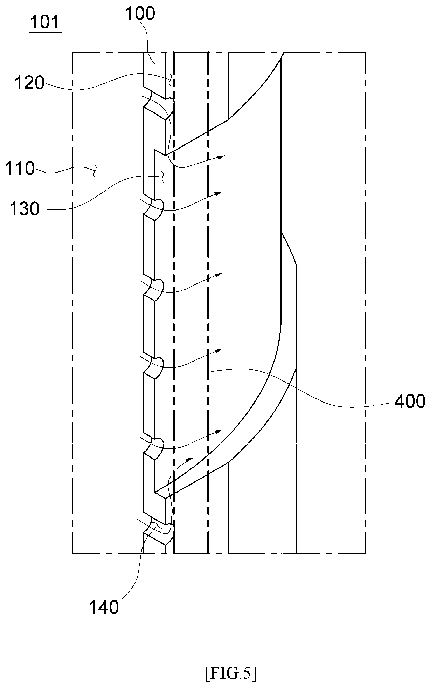

Hereinafter, a damping force forming member 101 according to an embodiment of the present disclosure will be described with reference to FIGS. 1 to 5.

The damping force forming member 101 is installed in a damper apparatus 102 and forms a damping force. Specifically, the damper apparatus 102 forms a damping force by a fluid in it. Also, the damper apparatus 102 includes a piston 200, a rod 300 that supports the piston 200, and an inner tube 400 in which a first chamber 410 and a second chamber 420 are separated by the piston 200.

As illustrated in FIGS. 1 to 5, the damping force forming member 101 according to an embodiment of the present disclosure includes a body 100, a plurality of through-holes 140, and a first flow passageway 120.

The body 100 is supported by the inner tube 400. Specifically, at least part of the body 100 may be inserted and placed into the first chamber 410 of the inner tube 400.

Moreover, the body 100 is placed in such a manner that at least part of the inner circumference faces the outer circumference of the rod 300. Also, the body 100 may form a damping force when the rod 300 extends. Specifically, the body 100 may be formed with a cavity 110 so that the rod 300 is inserted and placed at the center. When the rod 300 extends to a certain stroke or longer, the fluid in the body 100 may be pressurized, thereby forming a damping force. The fluid may be oil.

For example, the body 100 may be roughly shaped like a "tube" through which the cavity 110 at the center is bored. That is, the outer diameter of the body 100 may be relatively smaller than the inner diameter of the inner tube 400.

A plurality of through-holes 140 may be bored at intervals on the body 100. Specifically, a plurality of through-holes 140 may be bored on the body 100 so that fluid is discharged toward the outer circumference of the body 100. That is, the fluid in the cavity 110 inside the body 100 may be discharged out of the body 100 through the plurality of through-holes 140.

The first flow passageway 120 may be placed between the body 100 and the inner tube 400 and guide the flow of the fluid in the first chamber 410 that has passed through the plurality of through-holes 140. Specifically, the first flow passageway 120 may direct a fluid discharged out of the body 100 through the plurality of through-holes 140 to move toward the piston 200.

With this configuration, the damping force forming member 101 according to an embodiment of the present disclosure may form a damping force as the space in the cavity 110 of the body 100 forms a high-pressure chamber when the rod 300 extends.

Moreover, the damping force forming member 101 may form a damping force by allowing the space in the cavity 110 to form a high-pressure chamber during a rebound stroke of the damper apparatus 102 by which the rod 300 extends.

Accordingly, the damping force forming member 101 according to an embodiment of the present disclosure is able to effectively prevent shocks transmitted to the damper apparatus by the damping force of the fluid when the rod 300 moves in a direction in which it extends.

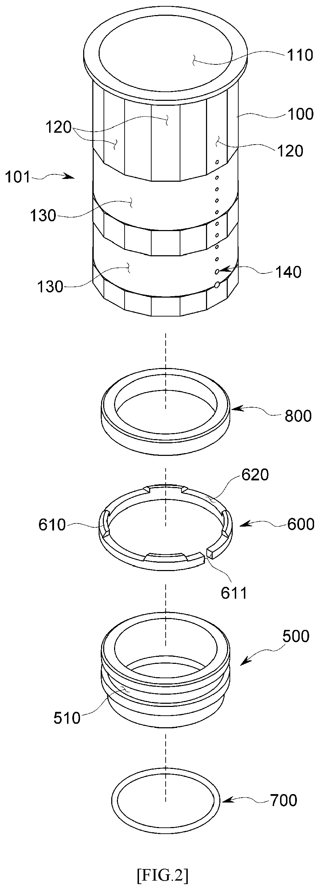

In addition, the first flow passageway 120 according to an embodiment of the present disclosure may be formed in one direction of the body 100, as illustrated in FIGS. 2 to 4.

The first flow passageway 120 may direct a fluid that has passed through the plurality of through-holes 140 and discharged between the body 100 and the inner tube 400 to move in one direction of the body 100. Specifically, the first flow passageway 120 may be formed on the body 100. Also, one region on the outer circumference of the body 100 where the first flow passageway 120 is formed may have a smaller outer diameter than the outer circumference of the body 100. That is, the fluid may move along the first flow passageway 120, in one direction of the body 100.

For example, the one direction of the body 100 may be the length direction of the body 100 which is roughly shaped like a "tube".

Thus, the fluid discharged out of the body 100 through the plurality of through-holes 140 by the first flow passageway 120 may move effectively in one direction of the body 100, and the damping force of the high-pressure chamber formed by the inside of the body 100 may be adjusted.

Furthermore, the plurality of through-holes 140 according to an embodiment of the present disclosure may be disposed at intervals in one direction of the body 100, as illustrated in FIGS. 2 to 4.

The plurality of through-holes 140 may be disposed on the body 100 at intervals in one direction of the body 100. Also, the plurality of through-holes 140 may be disposed in parallel in one direction of the body 100 in which the first flow passageway 120 is formed.

Moreover, a plurality of first flow passageways 120 according to an embodiment of the present disclosure may be disposed at intervals in a circumferential direction of the body 10, as illustrated in FIGS. 2 to 4.

A plurality of first flow passageways 120 may be formed at intervals on the body 100 in a circumferential direction of the body 100. Specifically, a plurality of first flow passageways 120 may be disposed at intervals on the outer circumference in a circumferential direction of the body 100, and the outer circumference of the body 100 may be stepped or recessed so as to cause the fluid to move.

For example, the plurality of first flow passageways 120 may be formed in the shape of a slit, and the outer circumference of the body 100 having them may be roughly "polygonal".

In addition, one of the plurality of first flow passageways 120 according to an embodiment of the present disclosure may be formed in one region of the body 100 where the plurality of through-holes 140 are formed.

The plurality of through-holes 140 may be disposed at intervals on one of the plurality of first flow passageways 120 in the length direction of the body 100.

That is, the fluid discharged through the plurality of through-holes 140 may move along the first flow passageway 120 where the through-holes 140 are formed, among the plurality of first flow passageways 120.

Furthermore, the damping force forming member 101 according to an embodiment of the present disclosure may further include a second flow passageway 130.

The second flow passageway 130 may be recessed on the body 100 in a circumferential direction of the body 100. Also, the second flow passageway 130 may direct a fluid that has passed through the plurality of through-holes 140 to move along the outer circumference of the body 100. Moreover, the second flow passageway 130 may allow the discharged fluid to be distributed to the other first flow passageways 120 without getting stagnant in the first flow passageway 120 where the through-holes 140 are formed.

Specifically, the second flow passageway 130 may effectively prevent a bottleneck phenomenon that may occur when the fluid that has moved to the first flow passageways 120 becomes stagnant.

In addition, according of an embodiment of the present disclosure, when the rod 300 extends, the fluid in the body 100 may be discharged out of the body 100 through the plurality of through-holes 140, thereby adjusting the damping force.

During a rebound stroke of the damper apparatus 102, the rod 300, along with the piston 200, moves in a direction in which the volume of the first chamber 310 becomes smaller, and the fluid remaining in the high-pressure chamber formed inside the body 100 of the damping force forming member 101 may be discharged out of the body 100 through the plurality of through-holes 140, thereby adjusting the damping force.

Specifically, the damping force may be adjusted according to the distance between the plurality of through-holes 140 and the diameter of the plurality of through-holes 140.

For example, at least some of the plurality of through-holes 140 may be spaced at different intervals from each other.

Accordingly, the damping force of the damper apparatus 102 may be adjusted by altering the design of the damping force forming member 101 or replacing the damping force forming member 101 by another with an altered design.

Furthermore, a plurality of second flow passageways 130 according to an embodiment of the present disclosure may be disposed at intervals on the body 100, as illustrated in FIG. 2 to 5.

The second flow passageways 130 may be disposed at intervals on the body 100 in the length direction of the body 100.

Furthermore, the plurality of through-holes 140 according to an embodiment of the present disclosure may have a smaller diameter as they become farther away from the piston 200 in the length direction of the body 100.

Since the through-holes 140 have a smaller diameter as they become farther away from the piston 200, the inside of the body 100 forms a high-pressure chamber, and a damping force may be effectively formed and adjusted.

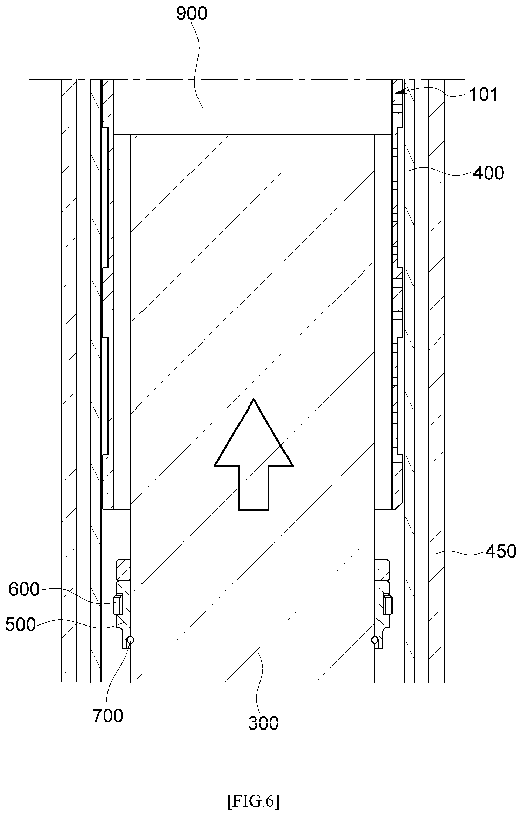

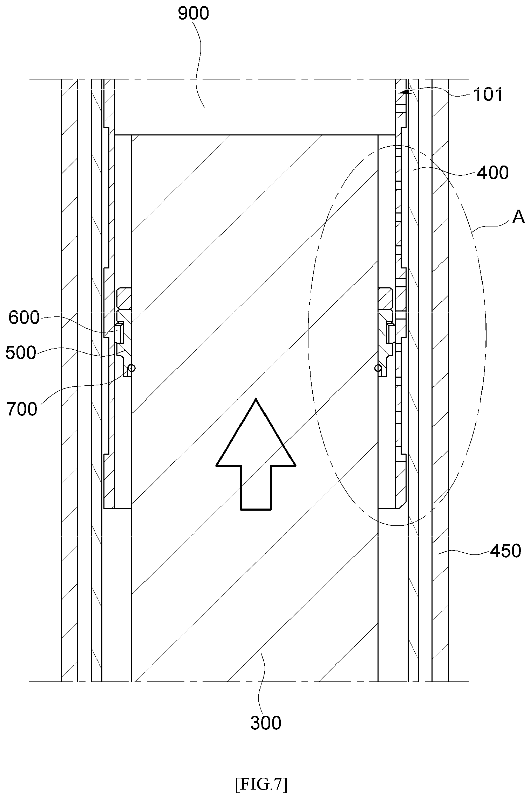

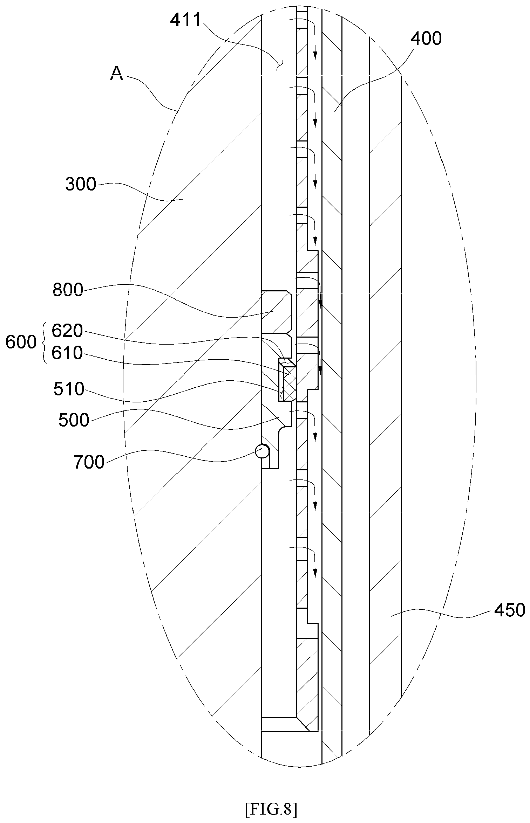

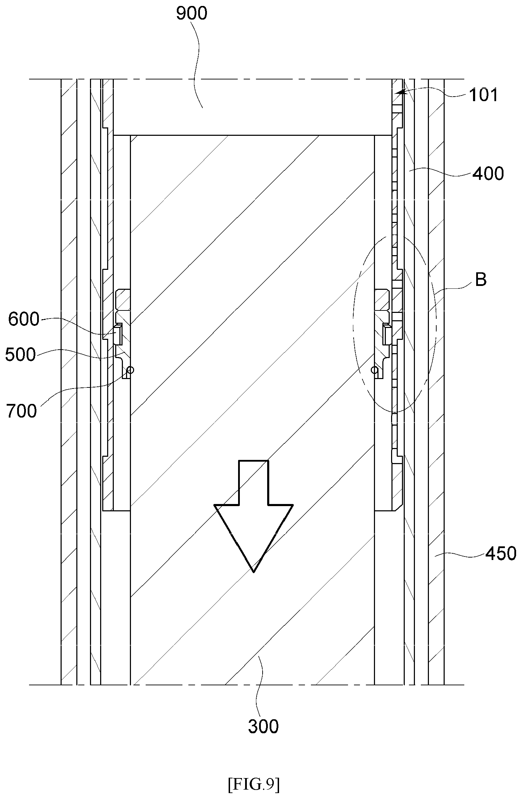

Hereinafter, the damper apparatus 102 according to an embodiment of the present disclosure will be described with reference to FIGS. 1 to 11.

As illustrated in FIG. 1, the damper apparatus 102 according to an embodiment of the present disclosure includes a piston 200, a rod 300, an inner tube 400, a stopper 500, a piston ring 600, and a damping force forming member 101.

The piston 200 includes a valve in it for opening and closing a flow passageway. The valve included in the piston 200 is opened and closed by the pressure of a fluid generated by the movement of the piston 200.

The rod 300 supports the piston 200. Specifically, the piston 200 may be supported by the rod 300, and the piston 200 and the rod 300 may be moved together.

The inner tube 400 is hollow inside, and may be formed longitudinally in one direction. Also, a fluid for damping is stored inside the inner tube 400. Moreover, the piston 200 is placed inside the inner tube 400 and separates the first chamber 410 and the second chamber 420.

Specifically, the volumes of the first chamber 410 and the second chamber 420 may vary with the movement of the piston 200. That is, as the piston 200 moves in the length direction of the inner tube 400, the volumes of the first chamber 410 and the second chamber 420 may be varied.

The stopper 500 is supported by the rod 300. Also, the stopper 500 may be placed on the rod 300 in the length direction of the rod 300, spaced apart from the piston 200.

The piston ring 600 is supported by the stopper 500. Specifically, the stopper 500 is provided to limit the maximum stroke of the rod 300.

At least part of the damping force forming member 101 is placed within the first chamber 410 of the inner tube 400. Also, when the rod 300 extends, the damping force forming member 101 may come into contact with the piston ring 600 and form a damping force. Specifically, when the outer circumference of the piston ring 600 comes into contact with an inner surface of the damping force forming member 101, a high-pressure chamber may be formed above the piston ring 600 and inside the damping force forming member 101.

For example, the damping force forming member 101 included in the damper apparatus 102 according to an embodiment of the present disclosure may be identical to the above-described damping force forming member 101 according to an embodiment of the present disclosure.

Thus, in the damper apparatus 102 according to an embodiment of the present disclosure, when the rod 300 moves in a direction in which it extends outward of the inner tube 400 through a rebound stroke, the piston ring 600 and the damping force forming member 101 may come into contact with each other, and a high-pressure chamber may be formed inside the damping force forming member 101, thereby forming a damping force for the damper apparatus 102.

Furthermore, the piston ring 600 of the damper apparatus 102 according to an embodiment of the present disclosure may include a ring body 610 and a ring flow passageway 620, as illustrated in FIG. 2.

The ring body 610 may have an opening 611 so that both ends thereof are spaced apart from each other. Also, the ring body 610 may be placed in a circumferential direction of the stopper 500. Specifically, the ring body 610 may be roughly shaped like a partially open "circle" with an opening 611.

For example, the ring body 610 may be formed from an elastically deformable material. That is, the ring body 610 may be formed in a circumferential direction to include an elastically deformable material.

The ring flow passageway 620 may be formed on one side of the ring body 610 closer to the damping force forming member 101 than the piston 200 is. Also, the ring flow passageway 620 may guide the movement of fluid.

Specifically, the ring flow passageway 620 may direct the fluid on the other side of the ring body 610 to move toward one side of the ring body 610.

The ring flow passageway 620 may be formed by recessing one region of the ring body 610 which is positioned further away from the piston 200 than the ring flow passageway 620. A plurality of ring flow passageways 620 may be formed in a circumferential direction of the piston ring 600.

Moreover, the ring flow passageway 620 may allow the piston ring 600 to move in a direction in which the piston ring 600 becomes farther away from the damping force forming member 101, inside the damping force forming member 101, and, when the rod 300 contracts, may allow at least part of the fluid in the first chamber 410 to move in a direction opposite to the direction in which the rod 300 contracts. Specifically, the ring flow passageway 620 may allow at least part of the fluid in the first chamber 410 to pass through the stopper 500 and move in a direction away from the piston 200, so that the fluid is supplied into the damping force forming member 101.

In addition, the stopper 500 according to an embodiment of the present disclosure may include a ring groove 510, as illustrated in FIG. 2.

The ring groove 510 may be formed in a circumferential direction in one region of the outer circumference of the stopper 500. Also, the ring groove 510 may be recessed so as to support the piston ring 600 and guide the movement of fluid.

Furthermore, when the inner circumference of the damping force forming member 101 according to an embodiment of the present disclosure and the piston ring 600 come into contact with each other, the ring body 610 moves in a direction in which the opening 611 becomes narrower, and a fluid in the damping force forming member 101 may be restrained from passing through the stopper 500 and moving toward the piston 200.

Specifically, both ends of the ring body 610 become closer in a direction in which the opening 611 becomes narrower, and the other side of the piston ring 600 comes into contact with the other side wall surface forming the ring groove 510 and serves as a sealing in order to prevent the fluid in the damping force forming member 101 from passing through the stopper 500 and moving toward the piston 200. Thus, the outer circumference of the piston ring 600 and the inside of the damping force forming member 101 may remain sealed through surface contact.

That is, when the rod 300 moves in a direction in which it extends outward of the inner tube 400 through a rebound stroke, toward a region where a plurality of through-holes 140 of the damping force forming member 101 are formed, the piston ring 600 moves in a direction in which the opening 611 becomes narrower as the piston ring 600 and the inner circumference of the damping force forming member 101 come into contact with each other, and the other side of the piston ring 600 comes into contact with the other side wall surface forming the ring groove 510 and prevents the fluid in the damping force forming member 101 from passing through the outer circumference of the piston ring 600 and the stopper 500 and moving in a direction opposite to the direction of travel of the rod 300.

In other words, when the rod 300 moves in a direction in which it extends outward of the inner tube 400 through a rebound stroke, the piston ring 600 serves as a sealing while elastically compressing the inner circumference of the damping force forming member 101, thereby causing the fluid in the damping force forming member 101 to move in one direction inside the damping force forming member 101 along the direction of travel of the rod 300.

Incidentally, when the rod 300 moves in a direction in which it extends outward of the inner tube 400 through a rebound stroke, as far as where the plurality of through-holes 140 of the damping force forming member 101 are not formed, or if the pressure in the damping force forming member 101 is too high, the high-pressure fluid in the damping force forming member 101 may cause some of the oil to be discharged through the opening 611 of the piston ring 600. In this case, the fluid may be moved, not through a sealing-forming surface, but through the ring flow passageway 620 and the opening 610, as the outer circumference of the piston ring 600 and the damping force forming member 101 come into contact with each other.

That is, when the rod 300 moves in a direction in which it extends outward of the inner tube 400 and a high pressure above a certain level is formed in the damping force forming member 101, the ring flow passageway 620 and the opening 611 guide the flow of the high-pressure fluid in the damping force forming member 101 and the space above the stopper 500, and adjusts the pressure inside the damping force forming member 101, thereby effectively preventing damage to the damping force forming member 101 and the damper apparatus 102.

Alternatively, when the rod 300 moves in a direction in which it extends outward of the inner tube 400 through a rebound stroke, as far as where the plurality of through-holes 140 of the damping force forming member 101 are not formed, if the fluid in the damping force forming member 101 cannot be discharged through the plurality of through-holes 140, the fluid may be discharged through the opening 611, and the internal pressure may be adjusted.

Alternatively, after a rebound stroke, when the piston ring 600 comes into contact with the inner circumference of the damping force forming member 101 and moves in a direction in which the rod 300 contracts, one side of the piston ring 600 where the ring groove 510 is formed moves so as to become closer to one side wall surface forming the ring groove 510, and the fluid beneath the piston ring 600 on the inner circumference of the damping force forming member 101 may be supplied into the space above the piston ring 600 in the damping force forming member 101 through the piston ring 600, the ring groove 510, and the ring flow passageway 620, in a direction opposite to the rod 300.

That is, once a compression stroke is performed in a direction in which the rod 300 contracts, while the stopper 500 is placed inside the damping force forming member 101 by means of the ring flow passageway 620, the piston 200 may move in a direction in which the volume of the second chamber 420 becomes smaller. In this case, the fluid remaining beneath the stopper 500 may flow above the stopper 500 or the piston ring 600, along with the movement of the stopper 500.

Moreover, the damping force forming member 101 according to an embodiment of the present disclosure may include a through-hole 140.

The through-hole 140 may be formed in the damping force forming member 101. Also, the through-hole 140 may direct the fluid in the damping force forming member 101 to be discharged between the outer circumference of the damping force forming member 101 and the inner tube 400, when the inner circumference of the damping force forming member 101 and the piston ring 600 come into contact with each other.

Specifically, when the rod 300 moves in a direction in which it extends outward of the inner tube 400 through a rebound stroke, the fluid in the damping force forming member 101 may be discharged through the through-hole 140. That is, when the rod 300 moves in a direction in which it extends outward of the inner tube 400 through a rebound stroke, a damping force is formed as the inner circumference of the damping force forming member 101 and the piston ring 600 come into contact with each other, and the fluid in the damping force forming member 101 may be discharged through the through-hole 140.

Thus, when the rod 300 moves in a direction in which it extends outward of the inner tube 400 through a rebound stroke, the fluid in the high-pressure chamber inside the damping force forming member 101 may be discharged through the through-hole 140.

In addition, in the damper apparatus 102 according to an embodiment of the present disclosure, a plurality of through-holes 140 with different diameters may be disposed at intervals in one direction of the damping force forming member 101.

A plurality of through-holes 140 with different diameters may be formed on the damping force forming member 101. Also, the plurality of through-holes 140 may be disposed at intervals in one direction of the damping force forming member 101.

As for the requirements for the diameters and spacing of the through-holes 140, design changes or adjustments may be made based on a damping force required for a vehicle where the damper apparatus 102 is installed.

Furthermore, the plurality of through-holes 140 according to an embodiment of the present disclosure may become smaller in diameter as they become farther away from the piston 200.

The plurality of through-holes 140, formed at intervals in one direction on the outer circumference of the damping force forming member 101, may become smaller in diameter farther away from the piston 200.

Thus, when the piston 200 moves toward the damping force forming member 101 and the rod 300 moves in a direction in which it extends, the space between the inside of the damping force forming member 101 and the piston ring 600 forms a high-pressure chamber, thereby generating a damping force, and the fluid in the damping force forming member 101 is discharged to the through-holes 140 as the piston ring 600 moves, and the damping force may be adjusted.

Specifically, since the through-holes 140 become smaller in diameter as they become farther away from the piston 200, the damping force may be varied with respect to the movement of the rod 300 in a direction in which it extends, as the inner circumference of the damping force forming member 101 and the piston ring 600 placed on the outer circumference of the stopper 500 come into contact with each other.

Furthermore, the damping force forming member 101 of the damper apparatus 102 according to an embodiment of the present disclosure may further include a first flow passageway 120.

The first flow passageway 120 may be placed on the damping force forming member 101 in a direction parallel to one direction in which the plurality of through-holes 140 are disposed. Also, the outer circumference of the damping force forming member 101 where the first flow passageway 120 is formed may be spaced apart from the inner circumference of the inner tube 400.

Specifically, the outer surface of the damping force forming member 101 where the first flow passageway 120 is formed may be recessed or stepped to allow the movement of fluid.

That is, the first flow passageway 120 may direct the fluid discharged out of the damping force forming member 101 through the plurality of through-holes 140 to move in one direction of the damping force forming member 101.

Furthermore, the damping force forming member 101 of the damper apparatus 102 according to an embodiment of the present disclosure may further include a second flow passageway 130.

The second flow passageway 130 may be placed on the damping force forming member 101 in a direction intersecting the first flow passageway 120. Also, the second flow passageway 130 may cause a fluid that has passed through the first flow passageway 120 to move in a direction intersecting the first flow passageway 120, thereby preventing the fluid from getting stagnant on the first flow passageway 120. Moreover, the second flow passageway 130 may be formed by recessing the damping force forming member 101, thereby forming a space in which fluid moves.

For example, in a case where a plurality of first flow passageways 120 are formed on the damping force forming member 101, the second flow passageway 130 may be formed in a direction intersecting the plurality of first flow passageways 120 so that the fluid that has passed through the through-holes 140 moves to the plurality of first flow passageways 120. That is, the second flow passageway 130 may allow the fluid discharged through the through-holes 140 to be distributed to the plurality of first flow passageways 120.

Moreover, the length of the ring groove 510 of the damper apparatus 102 according to an embodiment of the present disclosure may be relatively greater than the length of the piston ring 600.

The length of the ring groove 510 parallel to the length direction of the rod 300 may be relatively greater than the length of the piston ring 600 parallel to the length direction of the rod 300.

The piston ring 600 placed on the ring groove 510 may be moved along the length direction of the ring groove 510. Specifically, the piston ring 600 may be moved along the length direction of the ring groove 510 in a direction in which the rod 300 extends or contracts. By the lengthwise movement of the ring groove 510, the flow of a fluid passing through the ring flow passageway 620 may be selectively permitted or restricted.

In addition, the first flow passageway 120 according to an embodiment of the present disclosure may have a larger area than the plurality of through-holes 140.

The first flow passageway 120 may be formed in such a way as to guide the flow of a fluid discharged through the plurality of through-holes 140 and thereby cause the discharged fluid to move without stagnation.

Accordingly, the first flow passageway 120 has a larger area than the plurality of through-holes 140, so that fluid moves without a bottleneck phenomenon in the space between the inner tube 400 and the damping force forming member 101.

For example, if there are a plurality of first flow passageways 120, the plurality of through-holes 140 may have a larger area than the plurality of first flow passageways 120.

Alternatively, the second flow passageway 130 according to an embodiment of the present disclosure may have a larger area than the plurality of through-holes 140.

Since the second flow passageway 130 has a larger area than the plurality of through-holes 140, it may cause a fluid to move in a direction that intersects the direction in which a discharged fluid moves to the first flow passageway 120.

For example, the area of the first flow passageway 120 may be larger than or equal to the area of the second flow passageway 130.

Thus, the fluid that has passed through the plurality of through-holes 140 may be moved through the first flow passageway 120 and the second flow passageway 130 without stagnation.

Furthermore, the damper apparatus 102 according to an embodiment of the present disclosure may further include a rod guide 900.

The rod guide 900 is supported by one end of the inner tube 400, and may be movably supported by the rod 300 inserted in it.

Moreover, when the rod 300 moves, the rod guide 900 may prevent the fluid in the inner tube 400 from being discharged to the outside along with the movement of the rod 300. Specifically, at least part of the rod guide 900 may be inserted into the inner tube 400. Also, at least part of the rod guide 900 inserted into the inner tube 400 may be placed inside the damping force forming member 101.

A flange formed on one end of the body of the damping force forming member 101 is supported by one end of the inner tube 400, and part of the inner tube 400 may be inserted into the damping force forming member 101.

Also, one end of the damping force forming member 101 may be placed between the inner tube 400 and one end of the rod guide 900.

In addition, the damper apparatus 102 according to an embodiment may further include a shock absorbing member 800.

The shock absorbing member 800 is placed on the outer circumference of the rod 300, and may be located farther away from the piston 200 than the stopper 500 is. Specifically, one side of the shock absorbing member 800 may be supported by an upper part of the stopper 500.

The shock absorbing member 800 may absorb shocks created by contact between the stopper 500 and the rod guide 900 during a rebound stroke. Also, the shock absorbing member 800 may reduce shocks between the rod guide 900 and the stopper 500 when the rod 3400 is moved to its full stroke during a rebound stroke. That is, the shock absorbing member 800 may prevent contact between the stopper 500 and the rod guide 900 and therefore effectively prevent damage to the damper apparatus 102 caused by a collision between them or prevent a resulting shock from being transmitted to the vehicle where the damper apparatus 102 is installed.

For example, the shock absorbing member 800 may be formed by including an elastically deformable material.

Furthermore, the damper apparatus 102 according to an embodiment of the present disclosure may further include a stop ring 700.

The stop ring 700 may be placed between the rod 300 and the stopper 500, so that the stopper 500 is stably supported by the rod 300. Also, the stop ring 700 may prevent the stopper 500 from moving away from its installation position on the rod 300 toward the piston 200.

Specifically, a space where the stop ring 700 can be installed may be formed on the inner circumference of the stopper 500.

Furthermore, the damper apparatus 102 according to an embodiment may further include an outer tube 450.

The outer tube 450 is placed in such a way that at least part thereof encloses the inner tube 400, and may form the exterior of the damper apparatus 102. Specifically, the outer tube 450 may be made relatively longer than the inner tube 400. Also, the inner tube 400 and the outer tube 450 may be placed with a gap between them.

Hereinafter, an operation process of the damper apparatus 102 according to an embodiment of the present disclosure will be described with reference to FIGS. 1 to 12.

As illustrated in FIGS. 1 to 3 and FIG. 6, the piston 200 and the rod 300 are moved in a direction in which the volume of the first chamber 410 becomes smaller. The rod 300 is moved in a direction in which it extends outward of the inner tube 400. That is, the damper apparatus 102 performs a rebound stroke.

In this case, a fluid stored in the first chamber 410 causes the valve of the piston 200 to open and is drawn into the second chamber 420. That is, the piston 200 moves in a direction in which the volume of the first chamber 410 become smaller, and a first damping force is formed by the hydraulic pressure of the fluid.

As illustrated in FIGS. 1 to 3 and FIGS. 7 and 8, when the rod 300 is moved to a certain stroke or longer, the stopper 500 and piston ring 600 supported by the rod 300 move into the damping force forming member 101.

The other side of the piston ring 600 is moved toward the other side of the ring groove 510 by the hydraulic pressure, in the direction of movement of the rod 300.

The outer circumference of the piston ring 600 comes into contact with the inner circumference of the body 100 of the damping force forming member 101, and the piston 600 moves in a direction in which the opening 611 becomes narrower. That is, the piston ring 600 moves toward the ring groove 510, and the other side of the piston ring 600 comes into contact with the other side wall of the ring groove 510 which the piston ring 600 is facing, and serves as a sealing.

In this instance, a high-pressure chamber 411 is formed inside the damping force forming member 101 between the rod guide 900 and the piston ring 600 or the upper part of the stopper 500. That is, the damper apparatus 102 forms a damping force by the hydraulic pressure of the fluid in the high-pressure chamber 411.

Thus, during a rebound stroke performed by the damper apparatus 102, when the piston ring 60 or the stopper 500 goes into the damping force forming member 101, a second damping force is formed.

In other words, the other side of the piston ring 600 and the other side wall of the ring groove 510 come into contact with each other, and the piston ring 600 moves toward the center of the ring groove 510, thereby preventing the fluid above the piston ring 600 from flowing below the piston ring 600 and effectively forming a second damping force by means of the high-pressure chamber 411.

Moreover, the rod 300 continues moving as the outer circumference of the piston ring 600 comes into contact with the inner circumference of the body 100 of the damping force forming member 101. In this case, the fluid in the high-pressure chamber 411 is discharged through the through-holes 140. Also, the discharged fluid may be moved between the damping force forming member 101 and the inner tube 400 through the first flow passageway 120 and the second flow passageway 130.

Accordingly, when the rod 300 moves in a direction in which it extends, a damping force may be formed by the high-pressure chamber 411 and the pressure of a fluid discharged from the high-pressure chamber 411 through the through-holes 140. Thus, the damper apparatus 102 may effectively provide a damping force such as a conventional damper apparatus has never achieved before.

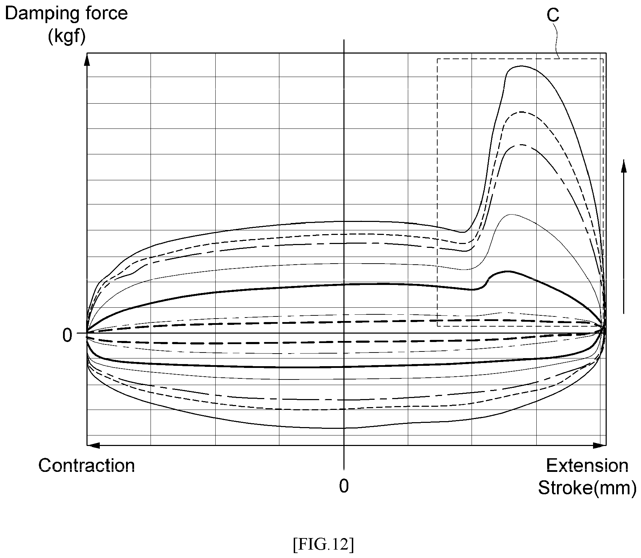

Specifically, as illustrated in FIG. 12, it can be seen from Zone C that the damping force is increased during a rebound stroke by the high-pressure chamber 411 formed by the damping force forming member 101 and a fluid discharged from the high-pressure chamber 411, induced by changes in stroke caused by the movement of the piston 200. That is, a second damping force may be formed during a rebound stroke by the fluid in the high-pressure chamber 411 and the pressure of a fluid discharged from the high-pressure chamber 411.

FIG. 12 shows that the stroke speed becomes faster toward the arrow. Specifically, a greater second damping force may be formed at a faster stroke speed, thereby providing better ride quality to the driver and effectively preventing shocks caused by full stroke travel.

Accordingly, even if a rebound stroke is performed at a high speed, the driver can enjoy a comfortable ride because of the greater second damping force.

As illustrated in FIGS. 1 to 3 and FIGS. 9 and 10, when a compression stroke is started after completion of the above-described rebound stroke, the stopper 500 positioned in the damping force forming member 101 moves in a direction in which the rod 300 extends and contracts.

In this instance, one side of the piston ring 600 is moved toward one side of the ring groove 510 by hydraulic pressure, in the direction of movement of the rod 300. One side of the piston ring 600 and one side wall of the ring groove 510 come into contact with each other, and the fluid beneath the piston ring 600 is drawn into the ring flow passageway 620 formed on one side of the piston ring 600.

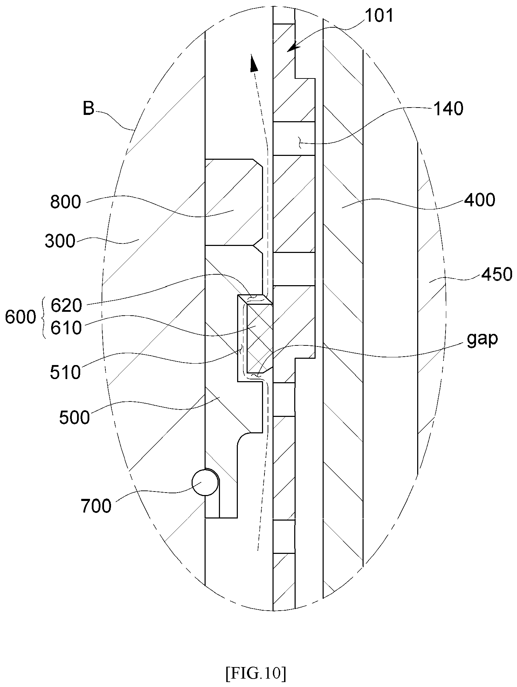

Specifically, as illustrated in FIG. 10, the other side wall of the ring groove 510 and the other side of the piston ring 600 are separated from each other with a gap between them, and the fluid beneath the piston ring 600 admitted through the gap passes through the space between the piston ring 600 and the stopper 500 and is drawn into the damping force forming member 101 between the rod guide 900 and the piston ring 600 or the upper part of the stopper 500 through the ring flow passageway 620.

That is, the above-mentioned gap serves as a bypass passage to allow the fluid to flow without getting stagnant, allowing the fluid to move to the ring flow passageway 620 without blockage.

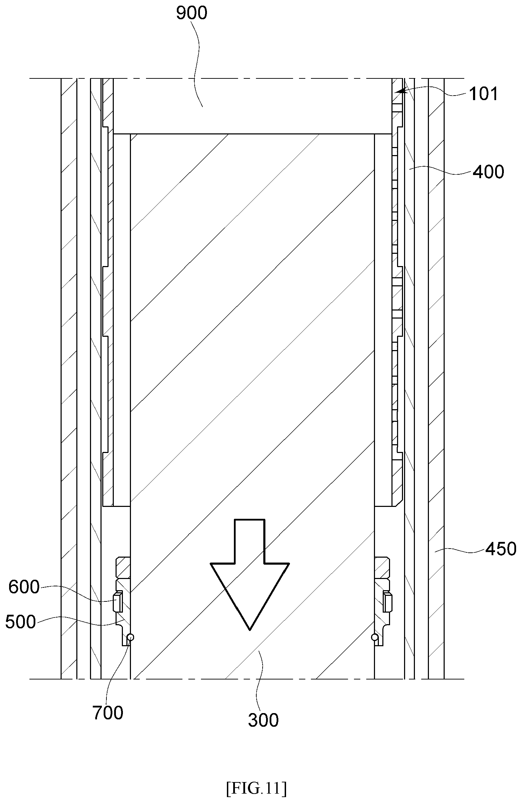

As illustrated in FIG. 11, when the rod 300 continues moving in a direction in which the rod 300 extends and contracts, the stopper 500 may come out of the damping force forming member 101, and the piston 200 may move in a direction in which the volume of the second chamber 420 becomes smaller.

When the contact between the outer circumference of the piston ring 600 and the inner circumference of the damping force forming member 101 is released, the piston ring 600 may move in a direction in which the opening 611 becomes wider.

Also, the valve of the piston 200 may be opened such that the fluid in the second chamber 420 is supplied to the first chamber 410.

With this configuration, the damper apparatus 102 according to an embodiment of the present disclosure may control damping force by a simple structure using the damping force forming member 101. Specifically, the damper apparatus 102 according to an embodiment of the present disclosure allows for effective tuning by configuring the damping force forming member 101, the stopper 500, and the piston ring 600, without the inner tube's complex structure for adjusting damping force or the configuration and structure of an elastic member.

Therefore, the damper apparatus 102 according to an embodiment of the present disclosure is capable of forming an additional damping force during a rebound stroke, thus making it effective in reducing shocks, and allows for absorbing abrupt shocks to a vehicle where the damper apparatus 102 is installed and provides better ride quality.

Although exemplary embodiments of the present disclosure are described above with reference to the accompanying drawings, it is understood that those skilled in the art may embody the technical configuration in other specific forms without changing the technical spirits and essential features of the present disclosure.

Therefore, it should be understood that the embodiments described above are exemplary and not restrictive in all aspects, and the scope of the present disclosure is defined by the appended claims rather than the above specific descriptions. It should be interpreted that all the changed and modified forms derived from the meaning, scope and equivalent concepts of the claims are included in the scope of the present disclosure.

## Claims

1. A damping force forming member (101) for forming a damping force, that is installed in a damper apparatus (102) including a piston (200), a rod (300) that supports the piston (200), and an inner tube (400) in which a first chamber (410) and a second chamber (420) are separated by the piston (200) placed therein, the damping force forming member (101) comprising:
a body (100) supported by the inner tube (400), that is placed in such a manner that at least part of the inner circumference thereof faces the outer circumference of the rod (300) and forms a damping force when the rod (300) extends;
a plurality of through-holes (140) formed at intervals on the body (100); and
a first flow passageway (120) placed between the body (100) and the inner tube (400), for guiding the movement of a fluid in the first chamber (410) that has passed through the plurality of through-holes (140).

2. The damping force forming member (101) of claim 1, wherein the first flow passageway (120) is formed in one direction of the body (100).

3. The damping force forming member (101) of claim 2, wherein the plurality of through-holes (140) are disposed at intervals in one direction of the body (100).

4. The damping force forming member (101) of claim 2 or 3, wherein a plurality of first flow passageways (120) are disposed at intervals in a circumferential direction of the body (100).

5. The damping force forming member (101) of claim 4, wherein one of the plurality of first flow passageways (120) is formed in one region of the body (100) where the plurality of through-holes (140) are formed.

6. The damping force forming member (101) of any one of claims 1 to 5, further comprising a second flow passageway (130) formed in a circumferential direction of the body (100) by recessing the outer circumference of the body (100), for directing a fluid that has passed through the plurality of through-holes (140) to move along the outer circumference of the body (100).

7. The damping force forming member (101) of any one of claims 1 to 6, wherein, when the rod (300) extends, a pressurized fluid in the body (100) is discharged out of the body (100) through the plurality of through-holes (140), and the damping force is adjusted.

8. A damper apparatus (102) comprising:
a piston (200);
a rod (300) that supports the piston (200);
an inner tube (400) having a fluid therein in which a first chamber (410) and a second chamber (420) are separated by the piston (200);
a stopper (500) spaced apart from the piston (200) and supported by the rod (300);
a piston ring (600) supported by the stopper (500); and
a damping force forming member (101), at least part of which is placed in the first chamber (410) of the inner tube (400), and which forms a damping force through contact with the piston ring (600) when the rod (300) extends.

9. The damper apparatus (102) of claim 8, wherein the piston ring (600) includes:
a ring body (610) placed in a circumferential direction of the stopper (500) and having an opening (611) so that both ends of the stopper (500) are spaced apart from each other; and
a ring flow passageway (620) formed on one side of the ring body (610) closer to the damping force forming member (101) than the piston (200), for guiding the movement of fluid.

10. The damper apparatus (102) of claim 9, wherein, when the inner circumference of the damping force forming member (101) and the piston ring (600) come into contact with each other, the ring body (610) moves in a direction in which the opening (611) becomes narrower, and a fluid in the damping force forming member (101) is restrained from passing through the stopper (500) and moving toward the piston (200).

11. The damper apparatus (102) of any one of claims 8 to 10, wherein the damping force forming member (101) includes a through-hole (140) that directs the fluid in the damping force forming member (101) to be discharged between the outer circumference of the damping force forming member (101) and the inner tube (400), when the inner circumference of the damping force forming member (101) and the piston ring (600) come into contact with each other.

12. The damper apparatus (102) of claim 11, wherein a plurality of through-holes (140) become smaller in diameter farther away from the piston (200).

13. The damper apparatus (102) of claim 12, wherein the damping force forming member (101) further includes a first flow passageway (120) placed parallel to one direction in which the plurality of through-holes (140) are disposed, spaced apart from the inner tube (400).

14. The damper apparatus (102) of claim 13, wherein the damping force forming member (101) further includes a second flow passageway (130) recessed in a direction intersecting the first flow passageway (120), for guiding the movement of a fluid that has passed through the first flow passageway (120).

15. The damper apparatus (102) of claim 9 or 10, wherein the ring flow passageway (620) is formed by recessing one region of the ring body (610) which is positioned further away from the piston (200) than the ring flow passageway (620), and, when the rod (300) contracts, directs at least part of the fluid in the first chamber (410) to pass through the stopper (500) and move in a direction away from the piston (200).
